# EUROPÄISCHE PATENTSCHRIFT

(11) **EP 3 455 121 B1**
(45) Veröffentlichungstag und Bekanntmachung des Hinweises auf die Patenterteilung: **29.03.2023**
(21) Anmeldenummer: 17725239.2
(22) Anmeldetag: 23.05.2017
(51) Int. Cl.: B62D 15/02, G06Q 10/10

(54) **VERFAHREN ZUM STEUERN DES BEREITSTELLUNGSBETRIEBS FÜR KRAFTFAHRZEUGE IN EINER PARKUMGEBUNG UND BETRIEBSSYSTEM FÜR EINE PARKUMGEBUNG**
METHOD FOR CONTROLLING A PROCESS FOR PROVIDING MOTOR VEHICLES IN A PARKING ENVIRONMENT, AND OPERATING SYSTEM FOR A PARKING ENVIRONMENT
PROCÉDÉ PERMETTANT DE COMMANDER LE FONCTIONNEMENT DE MISE À DISPOSITION DE VÉHICULES AUTOMOBILES DANS UN ENVIRONNEMENT DE STATIONNEMENT ET SYSTÈME DE FONCTIONNEMENT POUR UN ENVIRONNEMENT DE STATIONNEMENT

(30) Priorität: 15.07.2016 DE 102016008747
(43) Veröffentlichungstag der Anmeldung: 20.03.2019
(73) Patentinhaber: Audi AG, 85045 Ingolstadt (DE)
(72) Erfinder: ALTINGER, Harald, 85049 Gerolfing (DE); SCHULLER, Florian, 85737 Ismaning (DE); FEIST, Christian, 85049 Ingolstadt (DE)
(86) Internationale Anmeldenummer: PCT/EP2017/062339
(87) Internationale Veröffentlichungsnummer: WO 2018/010879

(56) Entgegenhaltungen:
- DE-A1-102013 222 071
- DE-A1-102015 219 463
- US-A- 5 710 557
- US-A1- 2010 156 672
- US-A1- 2010 156 672
- US-A1- 2012 111 937
- US-A1- 2012 111 937
- US-A1- 2012 188 100
- US-A1- 2012 188 100
- US-A1- 2013 231 824
- US-A1- 2013 231 824
- US-A1- 2016 203 650
- US-A1- 2016 203 650

## Beschreibung

Die Erfindung betrifft ein Verfahren zum Steuern des Bereitstellungsbetriebs für Kraftfahrzeuge in einer Parkumgebung, in der gesteuert durch eine Verwaltungseinrichtung der Parkumgebung Kraftfahrzeuge nach Abgabe durch den Fahrer automatisch einparkbar und nach Feststellung eines Abholwunsches durch den Fahrer an eine Abholposition in einem Abholbereich ausparkbar sind. Daneben betrifft die Erfindung ein Verwaltungssystem für eine Parkumgebung.

Parkumgebungen, beispielsweise eine Vielzahl von Abstellplätzen aufweisende Parkplätze und/oder Parkhäuser, in denen ein Fahrer sein Kraftfahrzeug, insbesondere entgeltpflichtig, abstellen kann, sind im Stand der Technik bereits weithin bekannt. Beispielsweise kann hierbei bei der Einfahrt in die entsprechende Parkumgebung eine Codekarte empfangen werden, mit welcher man nach Bezahlung an einem Kassenautomaten wieder aus der Parkumgebung ausfahren kann.

In letzter Zeit wurden, gerade im Hinblick darauf, dass viele Kraftfahrzeuge, zumindest innerhalb gewisser Systemgrenzen, zur vollständig automatischen Führung des Kraftfahrzeugs ausgebildete Fahrzeugsysteme aufweisen, automatisierte Parkumgebungen vorgeschlagen, in denen ein Fahrer sein Kraftfahrzeug an einem Übergabebereich abstellt, es mittels geeigneter Kommunikationsverbindungen, beispielsweise über ein Mobilgerät, bei einem Verwaltungssystem der Parkumgebung anmeldet, welches dem Kraftfahrzeug dann einen Abstellplatz zuweist und das Kraftfahrzeug automatisch, beispielsweise durch Ansteuerung des Kraftfahrzeugs, zu dem zugewiesenen Abstellplatz verbringt. Will der Fahrer das Kraftfahrzeug wieder abholen, kann er beispielsweise wiederum sein Mobilgerät nutzen, um diesen Abholwunsch dem Verwaltungssystem mitzuteilen, welches das Kraftfahrzeug ansteuert, seine Abstellposition zu verlassen und zu einer Abholposition in einem Abholbereich zu fahren. Dabei kann beispielsweise jeweils eine anzufahrende Trajektorie an ein zur vollständig automatischen Führung des Kraftfahrzeugs ausgebildete Fahrzeugsystem übermittelt werden. Eine im Folgenden als Verwaltungseinrichtung bezeichnete zentrale Recheneinrichtung des Verwaltungssystems der Parkumgebung kann dabei allgemein zur Koordination des Betriebs der verschiedenen Kraftfahrzeuge innerhalb der Parkumgebung ausgebildet sein, insbesondere auch kooperierend mit den Fahrzeugsystemen der Kraftfahrzeuge selbst.

Derartige Parksysteme sind beispielsweise aus DE 10 2008 027 692 A1 oder DE 10 2014 211 557 A1 bekannt. Weitere Parksysteme dieser Art werden durch US 2012/111937 A1 oder DE 10 2013 222071 A1 dargestellt.

Problematisch bei einer solchen Unterstützung des Fahrers durch vollautomatisches Ein- und Ausparken ist, dass, da der Fahrer zunächst kein Wissen über die genaue Abstellposition des Kraftfahrzeugs besitzt und dieses per Mobilgerät beziehungsweise Terminal zurückfordern muss, nicht unmittelbar sichergestellt werden kann, dass sich der Fahrer überhaupt in der Parkumgebung, insbesondere im Abholbereich, befindet. Dies öffnet jedoch die Tür zu missbräuchlichen Rückforderungen von Kraftfahrzeugen, wobei zudem Behinderungen des Verkehrsflusses auftreten können, nachdem das Kraftfahrzeug gegebenenfalls nicht vom Fahrer an der Abholposition im Abholbereich abgeholt wird. Über eine Rückforderung über die Kommunikationsverbindung zum Mobilgerät wäre die räumliche Anwesenheit des Fahrers ersichtlich ebenso nicht sicherzustellen, da Mobilfunk- und/oder Internetverbindungen eine große Reichweite aufweisen.

Der Erfindung liegt daher die Aufgabe zugrunde, eine Möglichkeit anzugeben, die Anwesenheit des Fahrers in der Parkumgebung, insbesondere im Abholbereich, sicherzustellen, welche sich einfach und verlässlich realisieren lässt.

Zur Lösung dieser Aufgabe ist bei einem Verfahren gemäß Anspruch 1 vorgeschlagen.

Es wird mithin vorgeschlagen, die Authentifizierung für eine Abholberechtigung als Authentifizierungsinformation zur Verfügung zu stellen, wobei die Rückforderung des vollautomatisch geparkten Kraftfahrzeugs über ein Auslesen der Authentifizierungsinformation mittels einer Ausleseeinrichtung, beispielsweise einem lokalen Terminal, in der Parkumgebung erfolgt. Dazu übergibt der Fahrer zunächst sein Kraftfahrzeug an die Verwaltung der Parkumgebung unter Nutzung des vollautomatischen Verwaltungssystems, welches eine Authentifizierungsinformation generiert, die diesem speziellen Kraftfahrzeug und Parkvorgang zugeordnet ist und dem Fahrer bereitgestellt wird. Nachdem häufig ohnehin ein Mobilgerät des Fahrers mit einer entsprechenden zentralen Verwaltungseinrichtung verbunden ist, lässt sich nach erfolgreicher Übergabe des Kraftfahrzeugs die für die Rückforderung des Kraftfahrzeugs benötigte Authentifizierungsinformation an das Mobilgerät übertragen oder anderweitig bereitstellen. Bei Rückkehr des Fahrers kann dieser die Authentifizierungsinformation mittels der Ausleseeinrichtung vor Ort auslesen lassen, so dass der Bereitstellungsvorgang nur gestartet werden kann, wenn der Fahrer auch tatsächlich im Abholbereich selber, anwesend ist. Unter dem Bereitstellungsvorgang ist dabei der Steuerprozess zu verstehen, an dessen Ende das Kraftfahrzeug sich an der Abholposition befindet, also bereitgestellt ist. Der Bereitstellungsvorgang kann den gesamten Ausparkvorgang von der Abstellposition betreffen, aber auch nur einen abschließenden Anteil des Ausparkvorgangs, wie im Folgenden noch näher erläutert werden wird.

Das erfindungsgemäße Verfahren stellt also sicher, dass der Fahrer tatsächlich im Abholbereich anwesend ist, um das Kraftfahrzeug entgegen zu nehmen.

Dabei ist es besonders bevorzugt, wenn zur Abgabe des Kraftfahrzeugs eine Kommunikationsverbindung zwischen einem Mobilgerät des Fahrers, insbesondere einem Smartphone, und der Verwaltungseinrichtung hergestellt wird, wobei die Authentifizierungsinformation an das Mobilgerät übertragen wird, und/oder die Ausleseeinrichtung die Authentifizierungsinformation von dem Mobilgerät ausliest. Nachdem der Fahrer, beispielsweise unter Nutzung einer für die Parkumgebung spezifischen und/oder allgemeinen Applikation (App), ohnehin den Einstellprozess in die Parkumgebung realisiert, kann die hierzu bestehende Kommunikationsverbindung mit der Verwaltungseinrichtung auch genutzt werden, um die generierte Authentifizierungsinformation von der Verwaltungseinrichtung an das Mobilgerät zu übertragen, wo sie entsprechend abgespeichert werden kann. Bei seiner Rückkehr kann der Fahrer wiederum sein Mobilgerät, insbesondere sein Smartphone, nutzen, beispielsweise die bereits erwähnte Applikation wieder starten und bei einer optisch auszulesenden Authentifizierungsinformation diese anzeigen lassen, woraufhin das Mobilgerät in den Erfassungsbereich eines entsprechenden optischen Sensors, insbesondere einer Kamera und/oder eines Scanners, einzubringen ist, so dass ein Auslesen der Authentifizierungsinformation aus dem Mobilgerät ermöglicht wird. Ist eine drahtlose Übertragung über eine Ausleseverbindung vorgesehen, kann entsprechend vorgegangen werden. Die Ausleseeinrichtung liest dann die Authentifizierungsinformation aus dem Mobilgerät, insbesondere dem Smartphone, aus, und kann entsprechend den Bereitstellungsvorgang freigeben, nachdem klar ist, dass sich der Fahrer an der Ausleseeinrichtung, insbesondere also wenigstens in der Parkumgebung, befindet.

Zur Herstellung einer Rückfallebene schlägt eine Ausgestaltung der vorliegenden Erfindung vor, dass die Authentifizierungsinformation zusätzlich einem insbesondere herstellerspezifischen Internetportal, an dem der Fahrer angemeldet ist, bereitgestellt wird, und der Fahrer die Authentifizierungsinformation bei Verlust auf dem Mobilgerät über das Internetportal wieder auf das Mobilgerät abruft und/oder bei optisch auslesbarer Authentifizierungsinformation mittels einer insbesondere der Ausleseeinrichtung benachbarten und/oder in diese integrierten Druckeinrichtung der Parkumgebung ausdrucken kann. Geht mithin die Authentifizierungsinformation verloren, sei es, weil sie auf dem Mobilgerät nicht gespeichert werden konnte oder weil das Mobilgerät beispielsweise nicht mehr über genügend Energie verfügt, um benutzt zu werden, können die Authentifizierungsinformationen auch in einem Internetportal hinterlegt werden, auf die der Fahrer über einen entsprechenden Nutzeraccount zugreifen kann. Damit wird es möglich, die Authentifizierungsinformation neu herunterzuladen und/oder eine Druckeinrichtung, beispielsweise ein Terminal, der Parkumgebung zu nutzen, um die Authentifizierungsinformation als Hardcopy auszudrucken, so sie optisch ausgelesen werden kann. Selbstverständlich ist es grundsätzlich auch denkbar, eine grundsätzlich drahtlos über eine Ausleseverbindung auszulesende Authentifizierungsinformation in eine optisch auslesbare Authentifizierungsinformation zu wandeln, wenn die Ausleseeinrichtung entsprechende Möglichkeiten aufweist. Das Internetportal kann von dem Hersteller des Kraftfahrzeugs und/oder dem Betreiber der Parkumgebung betrieben werden. Bei herstellerspezifischen Internetportalen besteht der Vorteil, dass Fahrer (bzw. allgemein dem Kraftfahrzeug zugeordnete Personen) oft ohnehin angemeldet sind.

In konkreter, bevorzugter Ausgestaltung kann vorgesehen sein, dass die Authentifizierungsinformation einen optisch von der Ausleseeinrichtung auslesbaren, auf einer Anzeigeeinrichtung des Mobilgeräts anzeigbaren Code, insbesondere einen Strichcode oder einen QR-Code, umfasst und/oder wenigstens ein Teil der Authentifizierungsinformation über eine Nahfeldkommunikationsschnittstelle des Mobilgeräts ausgelesen wird. Konkret kann die Authentifizierungsinformation mithin eine Strichcode-Information und/oder eine NFC- (Near Field Communication-) Information umfassen. Das hat den Vorteil, dass viele Geräte, die heutzutage bereits in Parkumgebungen eingesetzt werden, aber auch viele sonstige Terminals bereits die Möglichkeit aufweisen, Strichcodes beziehungsweise QR-Codes und/oder NFC-Informationen auszulesen, so dass derartige Geräte ohne spezielle Anpassungen für die Authentifizierung der Rückholung des Kraftfahrzeugs als Ausleseeinrichtung verwendet werden können. Damit ist die vorliegende Erfindung besonders einfach umzusetzen. Die Ausleseeinrichtung weist dann entsprechend einen Strichcode-Leser und/oder QR-Codeleser und/oder eine NFC-Kommunikationseinrichtung (Nahfeldkommunikationseinrichtung) auf, über die die Ausleseverbindung hergestellt werden kann.

Dabei sei darauf hingewiesen, dass die NFC-Technologie auch weitere Vorteile hat. So kann im Fall der Hinterlegung der Authentifizierungsinformation als NFC-Information diese auch bei entleertem elektrischen Energiespeicher des Mobilgeräts, beispielsweise entleertem Smartphone-Akkumulator, entsprechend über eine ausleseeinrichtungsseitige NFC-Kommunikationseinrichtung ausgelesen werden. Ein weiterer Vorteil der NFC-Technologie ist ihre Kurzreichweitigkeit im Bereich von wenigen cm, da es dann nicht zu einem "versehentlichen" Auslesen der Authentifizierungsinformation, beispielsweise bei Passieren der Ausleseeinrichtung, kommen kann, sondern eine gezielte, gewollte Handlung des Fahrers erforderlich ist, indem er sein Mobilgerät, insbesondere Smartphone, in den Kommunikationsbereich an der Ausleseeinrichtung einbringt, um die Ausleseverbindung herzustellen und damit insbesondere in bevorzugter Weise auch bereits den Bereitstellungsvorgang, also die Bereitstellung, in Auftrag zu geben.

Zweckmäßig ist es ferner, wenn zur Kommunikation mit der Verwaltungseinrichtung seitens des Mobilgeräts, wie bereits angedeutet wurde, eine Applikation verwendet wird, die auch die Authentifizierungsinformation zum Auslesen durch die Ausleseeinrichtung, insbesondere nach Bedieneranwahl einer Bereitstellungsfunktion, bereitstellt. Beispielsweise kann die Applikation (App) durch eine entsprechende Bedienaktion eingestellt werden, die Authentifizierungsinformation, die optisch auslesbar ist, auf einem Display des Mobilgeräts darzustellen, beispielsweise einen Strichcode oder QR-Code. Bei einer NFC-Information als Authentifizierungsinformation kann es jedoch bereits ausreichend sein, das Mobilgerät in die Reichweite der ausleseeinrichtungsseitigen NFC-Kommunikationseinrichtung zu bringen.

Eine besonders vorteilhafte Ausgestaltung sieht vor, dass nach Empfang einer fahrerseitigen Ausparkanfrage von dem Mobilgerät durch die Verwaltungseinrichtung das Kraftfahrzeug zunächst in einem Vorbereitungsvorgang des Ausparkvorgangs in eine Pufferzone der Parkumgebung ausgeparkt wird, von wo aus es bei innerhalb eines vorbestimmten Warteintervalls vorliegender Authentifizierungsinformation durch Einleiten des Bereitstellungsvorgangs an die Abholposition in dem Abholbereich verfahren wird oder bei nicht innerhalb des vorbestimmten Warteintervalls vorliegender Authentifizierungsinformation wieder eingeparkt wird. Auf diese Weise kann der Fahrer, um den Gesamtvorgang zu beschleunigen, das Ausparken bereits anfordern, ohne dass er sich dafür zwangsläufig schon in der Parkumgebung befinden muss. Um dennoch bei fehlerhaften Anfragen keine Verkehrs- und Platzprobleme oder Missbrauchmöglichkeiten zu schaffen, wird das Kraftfahrzeug jedoch nicht sofort nach einer derartigen Ausparkanfrage an die Abholposition verfahren, sondern zunächst in einen speziell in der Parkumgebung vorgesehen Pufferbereich verbracht, wo es auf das Auslesen der Authentifizierungsinformation an der Ausleseeinrichtung wartet, bevor der eigentliche Bereitstellungsvorgang als zweiter Teil des Ausparkvorgangs eingeleitet wird. Liegt nach dem Warteintervall, welches insbesondere zwischen 2 und 15 Minuten, beispielsweise 5 oder 10 Minuten, betragen kann, keine Authentifizierungsinformation vor, wird das Kraftfahrzeug wieder an eine Abstellposition verbracht, also eingeparkt. Der Pufferbereich ist dabei zweckmäßigerweise so gewählt, dass auch bei mehreren Abholbereichen für alle Abholbereiche eine kürzere Bereitstellungszeit erreicht wird.

In einer vorteilhaften Ausgestaltung kann vorgesehen sein, dass das Auslesen der Authentifizierungsinformation seitens der Verwaltungseinrichtung als Anweisung zum Bereitstellen des der Authentifizierungsinformation zugeordneten Kraftfahrzeugs interpretiert wird. Das bedeutet, allein die Tatsache, dass die Authentifizierungsinformation seitens der Ausleseeinrichtung ausgelesen wird, was, wie dargestellt, idealerweise eine gezielte Aktion des Fahrers fordert, kann bereits, um einen größtmöglichen Bedienkomfort zu erhalten, implizit den Abholwunsch durch den Fahrer wiedergeben, nachdem, da die Authentifizierungsinformation ja für das Kraftfahrzeug spezifisch ist, aus der Authentifizierungsinformation auch abgeleitet werden kann, um welches Kraftfahrzeug es geht, dessen Fahrer sich nun ja nachweisbar im Abholbereich oder wenigstens in der Parkumgebung befindet. Der Ausparkvorgang bzw. allgemein der Bereitstellungsvorgang kann dann unmittelbar beginnen. Mit anderen Worten kann zum Einleiten des Bereitstellungsvorgangs, insbesondere des gesamten Ausparkvorgangs, das Auslesen der Authentifizierungsinformation nicht nur notwendig, sondern auch hinreichend sein.

Das erfindungsgemäße Verfahren sieht vor, dass bei einer Parkumgebung mit mehreren Abholbereichen jedem Abholbereich eine Ausleseeinrichtung zugeordnet ist, wobei die Abholposition eines Kraftfahrzeugs bei vorliegendem Abholwunsch in dem der die dem Kraftfahrzeug zugeordnete Authentifizierungsinformation auslesenden Ausleseeinrichtung zugeordneten Abholbereich gewählt wird. Wenn also die Parkumgebung mehrere Abholbereiche aufweist, denen jeweils eine Ausleseeinrichtung zugeordnet ist, kann ein weiterer Nutzen aus der Tatsache, dass eine Authentifizierungsinformation ausgelesen wird, gezogen werden, nämlich dass dann auch bekannt wird, in welchem Abholbereich der Fahrer das Kraftfahrzeug entgegennehmen möchte, so dass entsprechend eine Abholposition des Kraftfahrzeugs in demjenigen Abholbereich festgelegt wird, dem die entsprechende Ausleseeinrichtung zugeordnet ist.

Gemäß eines nicht nach dem beanspruchten Gegenstand gebildeten Ausführungsbeispiels kann ferner vorgesehen sein, dass bei einer Parkumgebung mit mehreren Abholbereichen überprüft wird, ob eine Nutzerprofilinformation des Fahrers, insbesondere auf dem Internetportal oder seitens der Verwaltungseinrichtung, vorliegt, die einen bevorzugten Abholbereich anzeigt, wobei bei vorliegender Nutzerprofilinformation das Kraftfahrzeug in dem durch die Nutzerprofilinformation angezeigten Abholbereich bereitgestellt wird. Die Nutzerprofilinformation kann vom Fahrer, beispielsweise über eine App des Mobilgeräts, eingestellt werden und/oder statistisch nach genutzten Abholbereiche ermittelt werden. Neben der den Abholbereich beschreibenden Nutzerprofilinformation oder alternativ zu dieser können selbstverständlich auch andere Nutzerprofilinformationen genutzt werden, die andere Parameter für den Bereitstellungsvorgang/Ausparkvorgang und/oder sonstige fahrerseitig gewünschte Bedingungen/Services beschreiben, beispielsweise die Zusatznutzung eines Waschservice und dergleichen.

Neben dem Verfahren betrifft die Erfindung auch ein Verwaltungssystem für eine Parkumgebung gemäß Anspruch 8, in der gesteuert durch eine Verwaltungseinrichtung der Parkumgebung Kraftfahrzeuge nach Abgabe durch den Fahrer automatisch einparkbar und nach Feststellung eines Abholwunsches durch den Fahrer automatisch an eine Abholposition in einem Abholbereich ausparkbar sind, aufweisend die Verwaltungseinrichtung und eine Ausleseeinrichtung und ausgebildet zur Durchführung des erfindungsgemäßen Verfahrens. Die Verwaltungseinrichtung, welche bevorzugt eine zentrale Recheneinrichtung umfassen oder sein kann, kann auch als eine zentrale Koordinationseinrichtung bezeichnet werden, die die automatischen Ein- und Ausparkvorgänge der Kraftfahrzeuge steuert. Durch das Generieren der Authentifizierungsinformation für die eingestellten Kraftfahrzeuge und das spätere Auslesen der Authentifizierungsinformation erhält die Verwaltungseinrichtung verlässlich die Information, dass sich der Fahrer in der Parkumgebung in dem Abholbereich befindet und der Ausparkvorgang bzw. wenigstens der Bereitstellungsvorgang für das Kraftfahrzeug, dem die Authentifizierungsinformation zugeordnet ist, sinnvoll gestartet werden kann. Sämtliche Ausführungen bezüglich des erfindungsgemäßen Verfahrens lassen sich analog auf das erfindungsgemäße Verwaltungssystem übertragen, so dass auch mit diesem die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Teil einer Parkumgebung sowie mit einem Verwaltungs-system der Parkumgebung kommunizierende Vorrichtungen, und
- Fig. 2: einen Ablaufplan eines Ausführungsbeispiels des erfindungsgemäßen Verfahrens.

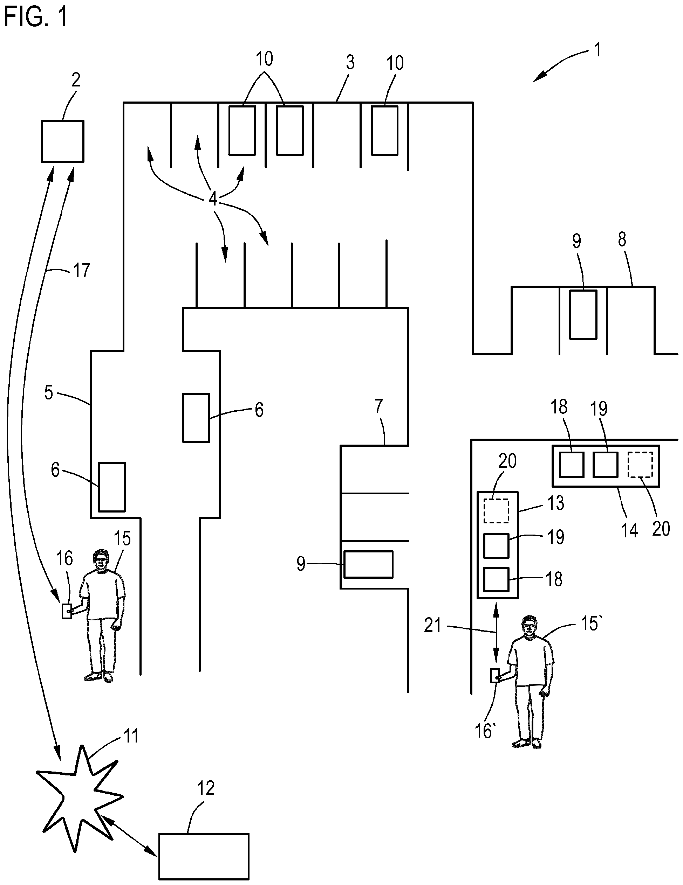

Fig. 1 zeigt eine Prinzipskizze einer Parkumgebung 1, die als ein Parkhaus und/oder ein mehrere Abstellplätze aufweisender Parkplatz ausgebildet sein kann. Nachdem in dieser Parkumgebung Kraftfahrzeuge durch deren geeignete Ansteuerung mittels einer Verwaltungseinrichtung 2 automatisch ein- und ausgeparkt werden sollen, weist die Parkumgebung 1 neben einem Abstellbereich 3 mit mehreren Abstellplätzen 4, von denen hier beispielhaft nur einige gezeigt sind, einen Übergabebereich 5, in dem einzustellende Kraftfahrzeuge 6 abgegeben werden können, und vorliegend zwei Abholbereiche 7, 8, an denen ausgeparkte Kraftfahrzeuge 9 nach dem vollautomatischen Ausparkvorgang an Abholpositionen bereitgestellt werden, auf. Während auch andere Möglichkeiten existieren, Kraftfahrzeuge automatisch auf einen Abstellplatz 4, mithin an eine Abstellposition, zu verbringen, soll vorliegend davon ausgegangen werden, dass die Kraftfahrzeuge 6, 9 beziehungsweise die zur Zeit abgestellten, auf Abstellplätzen 4 befindlichen Kraftfahrzeuge 10 jeweils ein zur vollständig automatischen Führung des Kraftfahrzeugs ausgebildetes Fahrzeugsystem aufweisen, welchem die Verwaltungseinrichtung 2 als zentrale Recheneinrichtung, die auch mit den Kraftfahrzeugen 6, 9 und 10 kommunizieren kann, beispielsweise eine abzufahrende Trajektorie übermitteln kann und/oder zumindest eine Karte der Parkumgebung 1 mit der entsprechenden Zielposition.

Die Verwaltungseinrichtung 2 hat ferner Zugriff auf das Internet 11 im allgemeinen und somit auch auf Internetportale 12, die beispielsweise herstellerspezifisch sein können. Ferner kommuniziert die Verwaltungseinrichtung 2, vorliegend drahtgebunden, mit Ausleseeinrichtungen 13, 14, wobei die Ausleseeinrichtung 13 als Terminal dem Abholbereich 7 zugeordnet ist, die Ausleseeinrichtung 14 als Terminal dem Abholbereich 8.

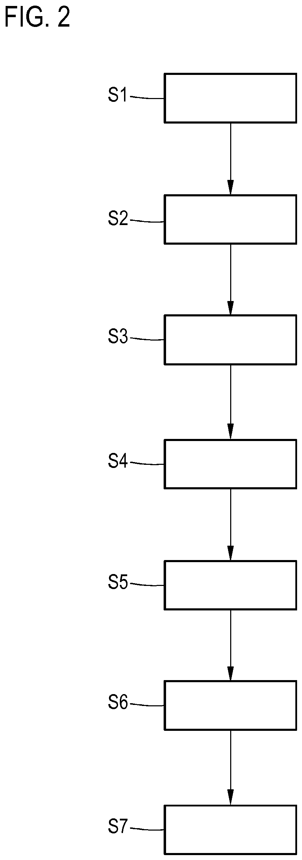

Die Funktionsweise eines erfindungsgemäßen Verwaltungssystems soll nun anhand eines Ausführungsbeispiels des erfindungsgemäßen Verfahrens, dessen Ablaufplan in Fig. 2 dargestellt ist, in Zusammenschau mit Fig. 1 näher erläutert werden.

In einem Schritt S1 stellt ein Fahrer 15 sein Kraftfahrzeug als einzuparkendes Kraftfahrzeug 6 im Übergabebereich 5 ab und nutzt eine auf einem Mobilgerät 16, hier einem Smartphone, vorgesehene Applikation, um sein Kraftfahrzeug als einzuparkendes Kraftfahrzeug 6 offiziell beim Verwaltungssystem 2 anzumelden, wozu eine Kommunikationsverbindung 17 genutzt wird, die beispielsweise als Mobilfunkverbindung und/oder Internetverbindung ausgebildet sein kann. In einem Schritt S2 leitet die Verwaltungseinrichtung 2 nicht nur die nötigen Schritte zum Einparken des entsprechenden Kraftfahrzeugs des Fahrers 15 ein, sondern generiert auch eine Authentifizierungsinformation, die für das Kraftfahrzeug spezifisch ist und über die Kommunikationsverbindung 17 an das Mobilgerät 16 übertragen wird. Gleichzeitig überträgt die Verwaltungseinrichtung 2 die Authentifizierungsinformation auch an das Internetportal 12, auf dem der Fahrer 15 angemeldet ist, so dass der Fahrer 15 auch bei Ausfall des Mobilgeräts 16 noch Zugriff auf die Authentifizierungsinformation hat. Die Authentifizierungsinformation umfasst vorliegend eine Strichcode-Information und eine NFC-Information.

In einem Schritt S3 geht der Fahrer seinen Tätigkeiten nach, während sein Kraftfahrzeug als eingeparktes Kraftfahrzeug 10 in der Parkumgebung 1 verbleibt.

Zu einem späteren Zeitpunkt, der in Fig. 1 durch entsprechend gestrichene Bezugszeichen markiert ist, kehrt der Fahrer 15' zur Parkumgebung 1 zurück, konkret zum Abholbereich 7, wo er die Ausleseeinrichtung 13 als Terminal vorfindet. Er hat nun im Schritt S4 mehrere Möglichkeiten, die Bereitstellung seines Kraftfahrzeugs als abzuholendes Kraftfahrzeug 9 zu veranlassen.

Zum einen ist es denkbar, dass er sein Mobilgerät 16' in den Kommunikationsbereich einer NFC-Kommunikationseinrichtung 18 der Ausleseeinrichtung 13 hält, um eine Ausleseverbindung 21 herzustellen. Über diese kann die Authentifizierungsinformation von dem Mobilgerät 16' ausgelesen werden, was insbesondere auch möglich ist, wenn das Mobilgerät 16' gerade keinen Betriebsstrom zur Verfügung hat.

Die zweite Möglichkeit ist, dass der Fahrer 15' in der bereits erwähnten Applikation eine Funktion zum Darstellen der Authentifizierungsinformation als Strichcode anwählt, welche dann mit einer Strichcode-Leseeinrichtung 19 der Ausleseeinrichtung 13 ausgelesen werden kann.

Sollte der Fahrer 15' die Authentifizierungsinformation nicht mehr auf seinem Mobilgerät 16' haben, kann er sie, falls dieses über Betriebsstrom verfügt, von dem Internetportal 12 wieder auf dieses laden oder aber eine vorliegend in die Ausleseeinrichtung 13 integrierte Druckeinrichtung 20 nutzen, um eine Hardcopy der Strichcode-Information der Authentifizierungsinformation zu erhalten, welche dann entsprechend von der Strichcode-Leseeinrichtung 19 der Ausleseeinrichtung 13 ausgelesen werden kann.

Der Auslesevorgang seitens der Ausleseeinrichtung 13 wird durch den Schritt S5 in Fig. 2 symbolisiert. Die ausgelesene Authentifizierungsinformation wird dann an die Verwaltungseinrichtung 2 übermittelt und dort ausgewertet. Das bedeutet, das entsprechend zugeordnete eingestellte Kraftfahrzeug 10 wird identifiziert und es wird, da das Auslesen der Authentifizierungsinformation sowohl notwendig als auch hinreichend für das Starten des Ausparkvorgangs ist, der Ausparkvorgang im Schritt S6 eingeleitet. Nachdem der Verwaltungseinrichtung 2 bekannt ist, an welcher Ausleseeinrichtung 13, 14 die Authentifizierungsinformation ausgelesen wurde, ist auch bekannt, an welchem Abholbereich 7, 8 das Kraftfahrzeug als abzuholendes Kraftfahrzeug 9 bereitgestellt werden soll, vorliegend im Abholbereich 7, bei dem sich der Fahrer 15' befindet.

In einem Schritt S7 nimmt der Fahrer 15' dann sein Kraftfahrzeug als abzuholendes Kraftfahrzeug 9 von der Abholposition entgegen, wobei er sich dem Kraftfahrzeug gegenüber, wie üblich, mittels seines Fahrzeugschlüssels authentifiziert, welcher ihm Zugang zu dem Kraftfahrzeug gewährt.

In einer optionalen Erweiterung der beschriebenen Ausführungsbeispiele kann die Parkumgebung 1 auch eine hier nicht gezeigte Pufferzone, idealerweise den Abholbereichen 7, 8 benachbart, aufweisen. Der Fahrer 15, 15' kann dann über sein Mobilgerät 16, 16' bereits vor Erreichen der Parkumgebung 1 eine Ausparkanfrage an die Verwaltungseinrichtung 2 senden, die dazu führt, dass das Kraftfahrzeug als abgestelltes Kraftfahrzeug 10 zunächst in den Pufferbereich verfahren wird, wo für ein vorbestimmtes Warteintervall, beispielsweise 5 Minuten, gewartet wird. Trifft der Fahrer 15' im Warteintervall an einer Ausleseeinrichtung 13, 14 ein und wird die Authentifizierungsinformation wie beschrieben ausgelesen, leitet die Verwaltungseinrichtung 2 einen Bereitstellungsvorgang ein, in dem der Ausparkvorgang abgeschlossen wird und das Kraftfahrzeug an die Abholposition im entsprechenden Abholbereich, hier Abholbereich 7, verfahren wird. Anderenfalls wird das Kraftfahrzeug wieder eingeparkt.

Es sei noch darauf hingewiesen, dass der Abholbereich 7, 8 zum Bereitstellen nicht zwangsläufig aufgrund der genutzten Ausleseeinrichtung gewählt werden muss. Obwohl nicht dem beanspruchten Gegenstand entsprechend, ist es auch denkbar, eine in der Verwaltungseinrichtung 2 und/oder dem Internetportal 12 abgelegte Nutzerprofilinformation zu nutzen, die einen Abholbereich 7, 8 beschreibt. Die Nutzerprofilinformation kann vom Fahrer, beispielsweise über eine App des Mobilgeräts 16, 16', eingestellt werden und/oder statistisch nach genutzten Abholbereichen 7, 8 ermittelt werden.

## Patentansprüche

1. Verfahren zum Steuern des Bereitstellungsbetriebs für Kraftfahrzeuge (6, 9, 10) in einer Parkumgebung (1), in der gesteuert durch eine Verwaltungseinrichtung (2) der Parkumgebung (1) Kraftfahrzeuge (6, 9, 10) nach Abgabe durch den Fahrer (15, 15') automatisch einparkbar und nach Feststellung eines Abholwunsches durch den Fahrer (15, 15') an eine Abholposition in einem Abholbereich (7, 8) ausparkbar sind und die mehrere Abholbereiche (7, 8) aufweist,
wobei dem Fahrer (15, 15') bei dem Abgeben des Kraftfahrzeugs (6, 9, 10) eine optisch und/oder drahtlos über eine Ausleseverbindung (21) abrufbare, parkvorgangspezifische, dem Kraftfahrzeug (6, 9, 10) zugeordnete Authentifizierungsinformation von der Verwaltungseinrichtung (2) bereitgestellt wird, **dadurch gekennzeichnet, dass** zum Abholen des Kraftfahrzeugs (6, 9, 10) die Authentifizierungsinformation von einer Ausleseeinrichtung (13, 14) in der Parkumgebung (1) ausgelesen wird und der Bereitstellungsvorgang nur bei vorliegender Authentifizierungsinformation eingeleitet wird, wobei jedem Abholbereich (7, 8) eine Ausleseeinrichtung (13, 14) zugeordnet ist, wobei die Abholposition eines Kraftfahrzeugs (6, 9, 10) bei vorliegendem Abholwunsch in dem der die dem Kraftfahrzeug (6, 9, 10) zugeordnete Authentifizierungsinformation auslesenden Ausleseeinrichtung (13, 14) zugeordneten Abholbereich (7, 8) gewählt wird.

2. Verfahren nach Anspruch 1,
wobei zur Abgabe des Kraftfahrzeugs (6, 9, 10) eine Kommunikationsverbindung (17) zwischen einem Mobilgerät (16, 16') des Fahrers (15, 15'), insbesondere einem Smartphone, und der Verwaltungseinrichtung (2) hergestellt wird, wobei die Authentifizierungsinformation an das Mobilgerät (16, 16') übertragen wird, und/oder dass die Ausleseeinrichtung (13, 14) die Authentifizierungsinformation von dem Mobilgerät (16, 16') ausliest.

3. Verfahren nach Anspruch 2,
wobei die Authentifizierungsinformation zusätzlich einem insbesondere herstellerspezifischen Internetportal (12), an dem der Fahrer (15, 15') angemeldet ist, bereitgestellt wird, und der Fahrer (15, 15') die Authentifizierungsinformation bei Verlust auf dem Mobilgerät (16, 16') über das Internetportal (12) wieder auf das Mobilgerät (16, 16') abruft und/oder der Fahrer (15, 15') die optisch auslesbare Authentifizierungsinformation mittels einer insbesondere der Ausleseeinrichtung (13, 14) benachbarten Druckeinrichtung (20) der Parkumgebung (1) ausdruckt.

4. Verfahren nach Anspruch 2 oder 3,
wobei die Authentifizierungsinformation einen optisch von der Ausleseeinrichtung (13, 14) auslesbaren, auf einer Anzeigeeinrichtung des Mobilgeräts (16, 16') anzeigbaren Code, insbesondere einen Strichcode oder QR-Code, umfasst und/oder wenigstens ein Teil der Authentifizierungsinformation über eine Nahfeldkommunikationsschnittstelle des Mobilgeräts (16, 16') ausgelesen wird.

5. Verfahren nach einem der Ansprüche 2 bis 4,
wobei zur Kommunikation mit der Verwaltungseinrichtung (2) seitens des Mobilgeräts (16, 16') eine Applikation verwendet wird, die auch die Authentifizierungsinformation zum Auslesen durch die Ausleseeinrichtung (13, 14), insbesondere nach Bedieneranwahl einer Bereitstellungsfunktion, bereitstellt.

6. Verfahren nach einem der Ansprüche 2 bis 5,
wobei nach Empfang einer fahrerseitigen Ausparkanfrage von dem Mobilgerät (16, 16') durch die Verwaltungseinrichtung (2) das Kraftfahrzeug (6, 9, 10) zunächst in einem Vorbereitungsvorgang des Ausparkvorgangs in eine Pufferzone der Parkumgebung (1) ausgeparkt wird, von wo aus es bei innerhalb eines vorbestimmten Warteintervalls vorliegender Authentifizierungsinformation durch Einleiten des Bereitstellungsvorgangs an die Abholposition in dem Abholbereich (7, 8) verfahren wird oder bei nicht innerhalb des vorbestimmten Warteintervalls vorliegender Authentifizierungsinformation wieder eingeparkt wird.

7. Verfahren nach einem der vorangehenden Ansprüche,
wobei das Auslesen der Authentifizierungsinformation seitens der Verwaltungseinrichtung (2) als Anweisung zum Bereitstellen des der Authentifizierungsinformation zugeordneten Kraftfahrzeugs (6, 9, 10) interpretiert wird.

8. Verwaltungssystem für eine Parkumgebung (1), in der gesteuert durch eine Verwaltungseinrichtung (2) der Parkumgebung (1) Kraftfahrzeuge (6, 9, 10) nach Abgabe durch den Fahrer (15, 15') automatisch einparkbar und nach Feststellung eines Abholwunsches durch den Fahrer (15, 15') an eine Abholposition in einem Abholbereich (7, 8) ausparkbar sind, aufweisend eine Verwaltungseinrichtung (2) und eine Ausleseeinrichtung (13, 14) und ausgebildet zur Durchführung eines Verfahrens nach einem der vorangehenden Ansprüche.

## Claims

1. Method for controlling a deployment operation for motor vehicles (6, 9, 10) in a parking environment (1) in which motor vehicles (6, 9, 10) can be automatically parked in a controlled manner by a management apparatus (2) of the parking environment (1) after being released by the driver (15, 15') and removed to a pick-up position in a pick-up region (7, 8) after a pick-up request by the driver (15, 15') has been ascertained, said parking environment having multiple pick-up regions (7, 8),
wherein, upon releasing the motor vehicle (6, 9, 10), the driver (15, 15') is supplied by the management apparatus (2) with authentication information which can be retrieved optically and/or wirelessly via a reading connection (21), is specific to the parking process and is assigned to the motor vehicle (6, 9, 10), **characterised in that** the authentication information is read by a reading apparatus (13, 14) in the parking environment (1) in order to pick up the motor vehicle (6, 9, 10), and the deployment operation is initiated only when authentication information is present, wherein a reading apparatus (13, 14) is assigned to each pick-up region (7, 8), wherein the pick-up position of a motor vehicle (6, 9, 10) is selected when there is a pick-up request in the pick-up region (7, 8) assigned to the reading apparatus (13, 14) reading the authentication information assigned to the motor vehicle (6, 9, 10).

2. Method according to claim 1,
wherein a communication link (17) is established between a mobile device (16, 16') of the driver (15, 15'), in particular a smartphone, and the management apparatus (2) in order to release the motor vehicle (6, 9, 10), wherein the authentication information is transmitted to the mobile device (16, 16'), and/or in that the reading apparatus (13, 14) reads the authentication information from the mobile device (16, 16').

3. Method according to claim 2,
wherein the authentication information is additionally supplied to an, in particular manufacturer-specific, Internet portal (12) to which the driver (15, 15') is logged on, and the driver (15, 15') retrieves the authentication information again on the mobile device (16, 16') via the Internet portal (12) if said information is lost on the mobile device (16, 16') and/or the driver (15, 15') prints out the optically readable authentication information by means of a printing apparatus (20) of the parking environment (1) which is in particular adjacent to the reading apparatus (13, 14).

4. Method according to claim 2 or 3,
wherein the authentication information comprises a code, in particular a bar code or QR code, which can be read optically by the reading apparatus (13, 14) and can be displayed on a display apparatus of the mobile device (16, 16'), and/or at least part of the authentication information is read via a near field communication interface of the mobile device (16, 16').

5. Method according to any of claims 2 to 4,
wherein, for communication by the mobile device (16, 16') with the management apparatus (2), an application is used which also supplies the authentication information to be read by the reading apparatus (13, 14), in particular after user selection of a deployment function.

6. Method according to any of claims 2 to 5,
wherein, after a driver-side removal request from the mobile device (16, 16') has been received by the management apparatus (2), the motor vehicle (6, 9, 10) is first removed, in a preparation process for the removal process, into a buffer zone of the parking environment (1), from where it is moved to the pick-up position in the pick-up region (7, 8) by initiating the deployment operation if authentication information is available within a predetermined waiting interval or is parked again if authentication information is not available within the predetermined waiting interval.

7. Method according to any of the preceding claims,
wherein the reading of the authentication information is interpreted by the management apparatus (2) as an instruction to deploy the motor vehicle (6, 9, 10) assigned to the authentication information.

8. Management system for a parking environment (1) in which motor vehicles (6, 9, 10) can be automatically parked in a controlled manner by a management apparatus (2) of the parking environment (1) after being released by the driver (15, 15') and removed to a pick-up position in a pick-up region (7, 8) after a pick-up request by the driver (15, 15') has been ascertained, said management system having a management apparatus (2) and a reading apparatus (13, 14) and being designed to perform a method according to any of the preceding claims.

## Revendications

1. Procédé de commande du mode de mise à disposition pour véhicules automobiles (6, 9, 10) dans un environnement de stationnement (1) dans lequel, sous la commande d'un dispositif de gestion (2) de l'environnement de stationnement (1), des véhicules automobiles (6, 9, 10) peuvent être stationnés automatiquement après remise par le conducteur (15, 15') et peuvent être déstationnés après constatation d'un souhait de récupération par le conducteur (15, 15') à une position de récupération dans une zone de récupération (7, 8) et qui présente plusieurs zones de récupération (7, 8),
dans lequel une information d'authentification spécifique au processus de stationnement, pouvant être appelée optiquement et/ou sans fil par l'intermédiaire d'une connexion de lecture (21) et associée au véhicule automobile (6, 9, 10), est mise à disposition du conducteur (15, 15') par le dispositif de gestion (2) lors de la remise du véhicule automobile (6, 9, 10), **caractérisé en ce que**, pour la récupération du véhicule automobile (6, 9, 10), l'information d'authentification est lue par un dispositif de lecture (13, 14) dans l'environnement de stationnement (1) et le processus de mise à disposition est lancé uniquement en présence d'une information d'authentification, dans lequel un dispositif de lecture (13, 14) est associé à chaque zone de récupération (7, 8), dans lequel la position de récupération d'un véhicule automobile (6, 9, 10) est sélectionnée, en présence d'un souhait de récupération, dans la zone de récupération (7, 8) associée au dispositif de lecture (13, 14) lisant l'information d'authentification associée au véhicule automobile (6, 9, 10).

2. Procédé selon la revendication 1,
dans lequel une connexion de communication (17) est établie entre un appareil mobile (16, 16') du conducteur (15, 15'), en particulier un smartphone, et le dispositif de gestion (2) pour la remise du véhicule automobile (6, 9, 10), dans lequel l'information d'authentification est transmise à l'appareil mobile (16, 16'), et/ou en ce que le dispositif de lecture (13, 14) lit l'information d'authentification sur l'appareil mobile (16, 16').

3. Procédé selon la revendication 2,
dans lequel l'information d'authentification est en outre mise à disposition d'un portail Internet (12), en particulier spécifique au fabricant, auquel le conducteur (15, 15') est connecté, et le conducteur (15, 15') appelle l'information d'authentification sur l'appareil mobile (16, 16') par l'intermédiaire du portail Internet (12) en cas de perte sur l'appareil mobile (16, 16') et/ou le conducteur (15, 15') imprime l'information d'authentification lisible optiquement au moyen d'un dispositif d'impression (20) de l'environnement de stationnement (1), en particulier voisin du dispositif de lecture (13, 14).

4. Procédé selon la revendication 2 ou 3,
dans lequel l'information d'authentification comprend un code lisible optiquement par le dispositif de lecture (13, 14) et affichable sur un dispositif d'affichage de l'appareil mobile (16, 16'), en particulier un code à barres ou un code QR, et/ou au moins une partie de l'information d'authentification est lue par l'intermédiaire d'une interface de communication en champ proche de l'appareil mobile (16, 16').

5. Procédé selon l'une quelconque des revendications 2 à 4,
dans lequel une application est utilisée pour la communication avec le dispositif de gestion (2) côté appareil mobile (16, 16'), qui met également à disposition l'information d'authentification pour la lecture par le dispositif de lecture (13, 14), en particulier après sélection par l'utilisateur d'une fonction de mise à disposition.

6. Procédé selon l'une quelconque des revendications 2 à 5,
dans lequel, après réception d'une demande de déstationnement côté conducteur de l'appareil mobile (16, 16') par le dispositif de gestion (2), le véhicule automobile (6, 9, 10) est d'abord déstationné dans une zone tampon de l'environnement de stationnement (1) dans un processus de mise à disposition du processus de déstationnement, d'où il est déplacé vers la position de récupération dans la zone de récupération (7, 8) en cas d'information d'authentification présente à l'intérieur d'un intervalle d'attente prédéterminé par le lancement du processus de mise à disposition ou est à nouveau stationné en cas d'information d'authentification non présente à l'intérieur de l'intervalle d'attente prédéterminé.

7. Procédé selon l'une quelconque des revendications précédentes,
dans lequel la lecture de l'information d'authentification côté dispositif de gestion (2) est interprétée en tant qu'instruction de mise à disposition du véhicule automobile (6, 9, 10) associé à l'information d'authentification.

8. Système de gestion pour un environnement de stationnement (1) dans lequel, sous la commande d'un dispositif de gestion (2) de l'environnement de stationnement (1), des véhicules automobiles (6, 9, 10) peuvent être stationnés automatiquement après remise par le conducteur (15, 15') et peuvent être déstationnés de la zone de récupération (7, 8) après constatation d'un souhait de récupération par le conducteur (15, 15'), présentant un dispositif de gestion (2) et un dispositif de lecture (13, 14) et conçu pour la mise en oeuvre d'un procédé selon l'une quelconque des revendications précédentes.
